(19) Europäisches Patentamt
European Patent Office
Office européen des brevets

(11) **EP 1 367 847 A1**

(12) **DEMANDE DE BREVET EUROPEEN**

(43) Date de publication:
**03.12.2003 Bulletin 2003/49**

(51) Int Cl.⁷: **H04Q 7/36**

(21) Numéro de dépôt: **03291271.9**

(22) Date de dépôt: **27.05.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **30.05.2002 FR 0206640**

(71) Demandeur: **EVOLIUM S.A.S.
75008 Paris (FR)**

(72) Inventeurs:
• **Gaertner, Anke
70197 Stuttgart (DE)**
• **Dupuch, Yannick
75016 Paris (FR)**

(74) Mandataire: **El Manouni, Josiane
Compagnie Financière Alcatel
Département de Propriété Industrielle,
5, rue Noel Pons
92734 Nanterre Cedex (FR)**

(54) **Procédé de dimensionnement d'un réseau de télécommunication à terminaux mobiles**

(57) Procédé de dimensionnement d'un réseau de télécommunication à terminaux mobiles communicant par radio. Le réseau fait appel à la norme UMTS utilisant la technique CDMA d'accès multiples à répartition de codes et une multiplicité de services, certains services étant transmis en mode circuit et d'autres en mode paquets.

Au cours d'une première étape, on détermine le nombre de canaux émetteurs, ou connexions admissibles, pour un service dans une cellule de façon que soit respectée les limites de blocage pour les connexions en mode circuit et les limites de retard en mode paquets.

Au cours d'une seconde étape, on considère le nombre de canaux émetteurs pour chaque service comme une variable aléatoire, on détermine la fonction de distribution cumulée (cdf) de cette variable aléatoire, ou d'une autre variable aléatoire qui en dépend, et on choisit le paramètre correspondant à cette variable de façon telle que cette fonction de distribution ait une valeur déterminée H, légèrement inférieure à 1, cette valeur étant telle que soit respectée la qualité de service requise en mode paquets et en mode circuit.

FIG.2

EP 1 367 847 A1

## EP 1 367 847 A1

**Description**

L'invention est relative à un procédé et à un moyen de dimensionnement d'un réseau de télécommunication à l'aide de terminaux mobiles communiquant par radio. Elle concerne plus particulièrement un procédé et un moyen de dimensionnement du réseau d'accès radio.

Un réseau de télécommunication à terminaux mobiles communiquant par radio comporte, d'une part, un réseau d'accès radio constitué d'une pluralité de cellules et, d'autre part, un réseau de coeur.

Une cellule est une zone géographique de dimension limitée, par exemple de l'ordre d'une centaine de mètres ou de plusieurs centaines de mètres de diamètre jusqu'à plusieurs kilomètres, dans laquelle on prévoit une station de base appelée "node B" dans la norme UMTS. Toutes les communications à transmettre aux terminaux mobiles se trouvant dans la cellule et provenant de ces terminaux transitent par cette station de base.

Le réseau de coeur, qui est par exemple, filaire, sert à transmettre les communications à longue distance.

Le réseau d'accès radio constitue la partie la plus onéreuse du système de télécommunication. On comprend donc aisément que pour optimiser le coût d'un tel système, il faut optimiser les dimensions de chaque cellule en fonction des utilisations prévues.

Ce problème de dimensionnement du réseau d'accès est particulièrement difficile à résoudre dans le cas d'un système UMTS car ce dernier fait appel à la technologie CDMA ou WCDMA, c'est-à-dire à la technique d'accès multiple à répartitions de codes (AMRC), qui consiste à affecter à chaque communication un code, les codes étant orthogonaux deux à deux. Autrement dit, un message affecté d'un code est transmis par la station de base vers l'ensemble des terminaux et chacun de ces derniers reçoit donc l'ensemble des messages mais du fait de l'orthogonalité des codes, chaque terminal reçoit les messages ayant le code attribué à ce terminal. Cependant, comme l'orthogonalité ne peut être parfaite, les autres messages créent des interférences ou parasites. De même, les terminaux émettent des messages en technologie CDMA vers la station de base.

Ainsi, dans une transmission CDMA, les parasites augmentent avec le trafic.

En outre, les transmissions peuvent être effectuées selon deux modes, à savoir soit en mode circuit, soit en mode paquet et elles sont constituées d'une pluralité de services différents ayant des débits différents et des tolérances de qualité différentes tels que la probabilité de blocage en mode circuit et les retards admissibles dans le cas du mode paquet, ou le taux d'erreur de bloc dans les deux modes.

Pour dimensionner les cellules, il est connu de déterminer un nombre d'abonnés émetteurs pour chaque service et quand le nombre d'abonnés utilisateurs pour chaque cellule est connu, on détermine alors les interférences dans la cellule pour les communications montantes (depuis les terminaux vers la station de base) et la puissance pour les communications descendantes (depuis la station de base vers les terminaux) et, à partir de ces données, on peut estimer le rayon de la cellule.

Pour obtenir le nombre d'utilisateurs, on détermine tout d'abord un nombre de canaux pour chaque service et ce nombre de canaux est interprété comme un nombre d'utilisateurs actifs de ce service. Le nombre d'utilisateurs émetteurs est obtenu en multipliant le nombre de canaux par un facteur d'activité.

Ainsi, le point le plus important pour dimensionner un réseau d'accès radio est de déterminer le nombre de canaux par service à partir de la densité d'abonnés et des divers autres paramètres du trafic.

On connaît deux procédés de détermination du nombre de canaux par service.

Le premier procédé consiste, pour chaque service, à déterminer le nombre de canaux. Pour les services en mode circuit, cette détermination est effectuée au moyen d'un procédé Erlang B pour chaque service. Pour les services en mode paquet, le nombre de canaux nécessaires pour chacun des services est déterminé sur la base d'un trafic moyen et d'un facteur lié au caractère discontinu des suites de paquets.

Ce procédé connu n'est pas satisfaisant car il conduit à un surdimensionnement étant donné qu'il ne tient pas compte du fait qu'il est très peu probable que tous les services utilisent simultanément le même nombre de canaux.

Le second procédé connu consiste à appliquer un procédé d'Erlang multiservices à la fois pour les services en mode circuit et les services en mode paquet.

Ce second procédé ne donne pas non plus entière satisfaction car il n'est, en fait, applicable seulement qu'aux services en mode circuit, les services en mode paquet étant traités comme s'ils constituaient des services en mode circuit.

De plus, les deux procédés connus ne tiennent pas compte de la qualité de service pour les services en mode paquet, c'est-à-dire les contraintes de retard maximum imposées à l'acheminement des paquets. On sait en effet qu'un réseau doit garantir que les paquets d'un service donné doivent être acheminés avec au maximum un retard d pour X % des cas, X étant, par exemple, égal à 95%.

En outre, les deux procédés connus ne sont pas applicables à une transmission en technique CDMA car, dans cette technique, même pour les services en mode circuit pour lesquels on assigne à chaque utilisateur un canal en mode circuit pour toute la durée de sa connexion, celui-ci ne mobilise pas de ressources quand il n'émet pas ou ne reçoit pas. En effet, dans un système CDMA, un utilisateur fait appel à des ressources du réseau, c'est-à-dire à de la capacité, seulement s'il provoque de l'interférence pour les autres utilisateurs, c'est-à-dire s'il émet (interférences montantes) ou s'il reçoit (interférences descendantes). C'est pourquoi dans un tel système, on fait en général appel à la notion d'activité de service qu'on représente par un facteur d'activité. Ce facteur d'activité est fonction de la probabilité d'émission quand un terminal est actif. Ainsi, si on multiplie le nombre de canaux actifs par le facteur d'activité, on obtient un nombre moyen d'utilisateurs émetteurs. Là aussi, ce procédé ne convient pas car il conduit à un sous-dimensionnement, étant donné qu'on considère seulement les cas moyens.

L'invention remédie à ces inconvénients.

Elle fournit un procédé et un moyen de dimensionnement de réseau d'accès radio pour un système de télécommunication utilisant la technique CDMA, notamment UMTS, c'est-à-dire à multiplicité de services, qui permettent un dimensionnement optimal des cellules.

Le procédé selon l'invention consiste :

- au cours d'une première étape, à déterminer combien de connexions sont admissibles pour un service dans une cellule de façon que soient respectées les limites admissibles de blocage pour les connexions en mode circuit et les limites admissibles de retard pour les connexions en mode paquet, et
- au cours d'une seconde étape, on considère le nombre de canaux émetteurs pour chaque service comme une variable aléatoire, on détermine la fonction de distribution cumulée de cette variable aléatoire, ou d'une autre variable aléatoire qui en dépend, et on choisit le paramètre correspondant à cette variable de façon telle que cette fonction de distribution soit égale à une valeur déterminée, de préférence peu différente de 1, par exemple de l'ordre de 0,99.

Avec ce procédé, on obtient un dimensionnement optimal du réseau d'accès car on tient compte du fait que, dans un réseau CDMA, d'une part, un utilisateur ne fait appel à la capacité du réseau que s'il génère des interférences pour les autres utilisateurs, et, d'autre part, l'ensemble des services utilise une même ressource.

Bien entendu, la valeur de la fonction de distribution cumulée qui est choisie pour fixer le nombre de canaux ou un autre paramètre (tel que la charge de la cellule ou l'interférence) est sélectionnée de façon à respecter la qualité de service requise tant en mode paquet qu'en mode circuit.

Le procédé peut également être mis en oeuvre pour déterminer la charge montante de la cellule. À cet effet, on considère cette charge montante comme une variable aléatoire, on détermine sa fonction de distribution cumulée et on choisit une charge correspondant à une valeur déterminée de cette fonction.

Le procédé peut également être utilisé pour déterminer la puissance descendante de chaque cellule, cette puissance descendante étant considérée comme une variable aléatoire.

On peut aussi déterminer la capacité totale d'une cellule de la même manière, c'est-à-dire en considérant cette capacité comme étant une variable aléatoire.

Ainsi, l'invention concerne, de façon générale, un procédé de dimensionnement d'un réseau de télécommunication à terminaux mobiles communicant par radio, ce réseau faisant appel à la norme UMTS utilisant la technique CDMA d'accès multiples à répartition de codes et une multiplicité de services, certains services étant transmis en mode circuit et d'autres en mode paquets, qui est caractérisé en ce qu'au cours d'une première étape, on détermine le nombre de canaux émetteurs, ou connexions admissibles, pour un service dans une cellule de façon que soit respectée les limites de blocage pour les connexions en mode circuit et les limites de retard en mode paquets, et, au cours d'une seconde étape, on considère le nombre de canaux émetteurs pour chaque service comme une variable aléatoire, on détermine la fonction de distribution cumulée de cette variable aléatoire, ou d'une autre variable aléatoire qui en dépend, et on choisit le paramètre correspondant à cette variable de façon telle que cette fonction de distribution ait une valeur déterminée H, légèrement inférieure à 1, cette valeur étant telle que soit respectée la qualité de service requise en mode paquets et en mode circuit.

La valeur H est, par exemple, de l'ordre de 0,99.

Dans une réalisation, le paramètre est choisi dans le groupe comportant : le nombre de canaux émetteurs pour chaque service, la charge de la cellule en voie montante, la puissance descendante pour chaque cellule, et la capacité totale de la cellule.

Par exemple, pour déterminer la charge de la cellule en voie montante, on calcule cette charge en la considérant comme une grandeur aléatoire $\tilde{x}^{UL}$ répondant à l'équation suivante :

$$\tilde{x}^{UL} = \left(1 + f^{UL}\right) \bullet \sum_{k=1}^{K} B_k \bullet \frac{\left(Eb/N_o\right)_k^{*UL} \bullet R_k^{UL}/R_c}{1 + \left(Eb/N_o\right)_k^{*UL} \bullet R_k^{UL}/R_c}$$

formule dans laquelle :

$f^{UL}$ est une valeur représentant l'interférence provoquée par les autres cellules sur la cellule considérée pour la voie montante,
$B_k$ est le nombre de canaux émetteurs pour le service k, $B_k$ étant une variable aléatoire,

$$\left(Eb/N_o\right)_k^{UL}$$

est le rapport signal à bruit requis pour le service k,
$R_k^{UL}$ est le nombre de bits par unité de temps pour le service k,
$R_c^k$ est le taux d'échantillonnage (nombre d'échantillons par unité de temps) de chaque symbole, et
K est le nombre total de services.

Le nombre $B_k$ de canaux émetteurs pour un service k est, par exemple, une variable aléatoire ayant la valeur suivante :

$$B_k = \sum_{j=1}^{C_k} \chi_j^k$$

formule dans laquelle :

$\chi_i^k$ est une variable aléatoire suivant la loi de Bernoulli et ayant la valeur 1 avec une probabilité $p_{em}^k$ et la valeur 0 avec une probabilité $1 - p_{em}^k$, $p_{em}^k$ étant la probabilité qu'un canal d'un service k soit émetteur, cette probabilité ayant la valeur suivante :

$$p_{em}^k = p_{occ}^k \bullet V_k$$

$V_k$ étant le facteur d'activité du service k, et $p_{occ}^k$ étant la probabilité qu'un canal réservé pour le service k soit occupé par un utilisateur, et $C_k$ est le nombre de canaux réservés pour le service k.

Pour déterminer la puissance totale $P_{tot}$ de la cellule, dans une réalisation, on détermine la puissance de la cellule par un processus itératif, le rayon de la cellule étant fixé à chaque étape d'itération et, en fonction de ce rayon :

a) on détermine la puissance pour chaque utilisateur et chaque service sur n anneaux concentriques partant du centre de la cellule jusqu'à un rayon qui est sensiblement égal à deux fois le rayon de la cellule,
b) on en déduit la puissance moyenne par utilisateur et par service,
c) on détermine la fonction de distribution cumulée de la puissance totale,
d) on détermine cette puissance totale pour la dite valeur H de la fonction de distribution cumulée, et
e) on compare cette puissance totale à la puissance maximale admise et, si elle est sensiblement égale à cette puissance maximale admise, le rayon de la cellule est celui dont on est parti, et si elle est différente on modifie ce rayon et on recommence les étapes a) à e).

D'autres caractéristiques et avantages de l'invention apparaîtront avec la description de certains de ses modes de réalisation, celle-ci étant effectuée en se référant aux dessins ci-annexés sur lesquels :

la figure 1 est un schéma illustrant les deux étapes du procédé conforme à l'invention,
la figure 2 est un diagramme montrant une partie de la seconde étape du procédé conforme à l'invention,
la figure 3 est un diagramme analogue à celui de la figure 2 pour une variante, et
la figure 4 est un diagramme correspondant à celui de la figure 3 pour une autre étape du procédé.

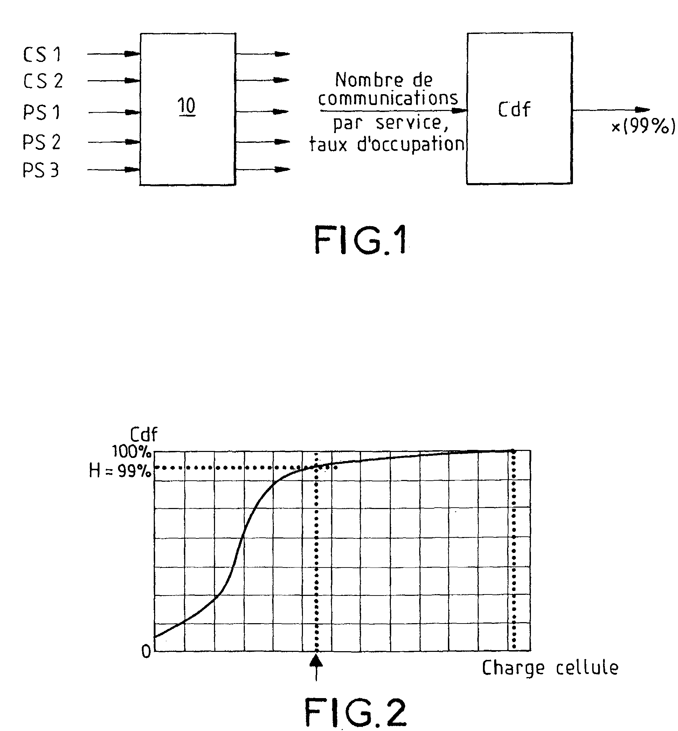

Dans l'exemple montré sur la figure 1, on a représenté deux services CS1 et CS2 en mode circuit et trois services PS1, PS2 et PS3 en mode paquet.

Pour chacun des services en mode circuit, on définit une qualité, ou degré, de service qui s'exprime par une probabilité de blocage qui ne doit pas être dépassée, par exemple 2%. Pour ces services en mode circuit, on cherche à déterminer le nombre de connexions ou de canaux virtuels acceptés avec le degré de service requis.

Pour chaque service en mode paquet, la qualité, ou degré, de service s'exprime en un retard maximum accepté pour l'acheminement des paquets. Pour chacun de ces services en mode paquet, on cherche à déterminer le nombre de canaux acceptés tant pour la voie montante que pour la voie descendante. De façon plus précise, les nombres de canaux attribués en mode paquet pouvant être différents en voie montante et en voie descendante, ces nombres doivent donc être déterminés indépendamment les uns des autres. En particulier, pour un même service, le nombre de canaux nécessaires pourra être plus élevé en voie descendante qu'en voie montante. Ainsi, en mode paquet, tous les calculs devront être effectués deux fois, une fois par voie.

La détermination des connexions acceptées peut, de façon en soi connue, être effectuée par un procédé Erlang B pour les services en mode circuit et par un procédé Erlang C pour les services en mode paquet.

Après avoir déterminé le nombre de canaux ou connexions acceptés, il faut déterminer la probabilité qu'une connexion est émettrice. Cette détermination dépend du taux d'occupation et du facteur d'activité.

On rappelle que le taux d'occupation est la probabilité d'un appel et que le facteur d'activité tient compte du fait que, lorsqu'une connexion est établie, il existe des silences qui sont de l'ordre de 50% du temps dans le cas de communications téléphoniques vocales. Ce dernier facteur est particulièrement important pour le dimensionnement d'un système utilisant la technique CDMA puisque, dans cette dernière technique, plus le nombre d'utilisateurs émettant simultanément est élevé, plus les interférences produites sont élevées.

Ainsi, la probabilité $p_{em}^k$ qu'un canal d'un service k soit émetteur s'exprime par la formule suivante :

$$p_{em}^k = p_{occ}^k \cdot V_k \tag{1}$$

Dans cette formule : $V_k$ est le facteur d'activité du service k, $p_{occ}^k$ est la probabilité qu'un canal réservé pour le service k soit occupé par un utilisateur.

Le facteur d'activité $V_k$ a la valeur 1 dans le cas des services en mode paquet.

Ainsi, le nombre $B_k$ de canaux émetteurs pour un service k est une variable aléatoire ayant la valeur suivante :

$$B_k = \sum_{j=1}^{C_k} \chi_j^k \tag{2}$$

Dans cette formule, $\chi_j^k$ est une variable aléatoire suivant la loi de Bernoulli et ayant la valeur 1 avec une probabilité $p_{em}^k$ et la valeur 0 avec une probabilité $1 - p_{em}^k$, et $C_k$ est le nombre de canaux réservés pour le service k, c'est-à-dire le nombre maximum d'utilisateurs actifs après l'étape d'acceptation.

Cette étape d'acceptation de connexions ou canaux est représentée par le bloc 10 sur la figure 1. En sortie de ce bloc, on obtient ainsi un nombre de communications par service et un taux d'occupation.

À partir du nombre de canaux émetteurs par service, on détermine, en voie montante, la charge par cellule et le niveau de réception minimum requis à la station de base (Noeud B) ou sensibilité de réception de signaux émis par un terminal mobile pour un service k. Cette dernière donnée permet de déterminer le diamètre de la cellule.

Le nombre de canaux émetteurs étant une variable aléatoire, la charge de la cellule est également une variable aléatoire. On rappelle que la charge de la cellule comprend les contributions de tous les services.

Avec le procédé selon l'invention, on effectue une détermination statistique de la charge de la cellule qui permet ainsi de tenir compte du fait que tous les services utilisent les mêmes ressources radio. Selon un aspect important de l'invention, pour dimensionner la charge de la cellule, on détermine la fonction de distribution cumulée cdf de la variable aléatoire que constitue cette charge de cellule et on détermine la charge de la cellule qui fournit une valeur de cette fonction de distribution cumulée légèrement inférieure à 100%. Autrement dit, on accepte un faible pourcentage d'échecs de connexions. Dans ces conditions, comme le montre le diagramme de la figure 2, la charge de la cellule peut être diminuée de façon importante. Ainsi, la figure 2 montre que si l'on fixe le seuil de la fonction de distribution cumulée à 99%, la charge de la cellule sera diminuée de plus de moitié par rapport à une situation où la valeur de la fonction de distribution cumulée cdf est de 100%.

Ainsi, en acceptant 1% de taux d'échecs de connexions, on peut diminuer de façon notable la valeur dimensionnante de la charge de la cellule et donc augmenter corrélativement le diamètre de la cellule. On rappelle ici que le diamètre de la cellule peut être déduit de la charge de la cellule en partant des considérations suivantes :

La charge de la cellule détermine l'interférence $i_o$ (dB) perçue par un utilisateur du service k. En effet :

$$i_{odB} = -10\log(1 - x_{UL}) - 10\log\left(1 + \left[\frac{C}{I}\right]_k\right)$$

Dans cette formule, $x_{UL}$ est la charge de la cellule, et :

$$\left[\frac{C}{I}\right]_{k\_dB} = \left[\frac{E_b}{N_o}\right]_{k\_dB} - PG\ ,$$

$\frac{C}{I}$ est le rapport porteuse à interférence, $N_0$ la densité de bruit thermique,

$$\left[\frac{E_b}{N_o}\right]_{k\_dB}$$

est le rapport signal à bruit requis pour le service k exprimé en dB, *PG* est le gain de traitement en décibels, c'est-à-dire la valeur logarithmique du rapport entre la fréquence d'échantillonnage et la fréquence de chaque bit pour le service k.

Cette valeur $i_o$ permet de déterminer la perte de trajet maximale admise (dénommée MAPL ou "Maximum Allowawable Pathloss") :

$$\text{MAPL}_i = P_k{}^{UL} - \text{Sref} - \Sigma L - \Sigma M + \Sigma G - i_{0dB}$$

$\text{MAPL}_i$ est la valeur du paramètre MAPL pour l'utilisateur i utilisant le service k, $P_k{}^{UL}$ est la puissance du mobile pour le service k en dBm, L représente les pertes, M les marges, G les gains, L, M et G étant exprimés en dB, et Sref est déterminé par la formule suivante :

$$\text{Sref} = NF + 10\log(N_0) + 10\log[(E_b/N_0)_k] + 10\log(R_k)$$

Dans cette formule, *NF* est le facteur de bruit, c'est-à-dire la figure de bruit en dB à la station de base (noeud B), et $R_k$ est le taux d'échantillonage des bits pour le service k.

Une fois le paramètre MAPL connu, on peut en déduire le diamètre de la cellule à partir de la formule connue de COST231-Hata.

Le calcul de la charge de la cellule en voie montante s'effectue en considérant la charge de la cellule comme une grandeur aléatoire $\tilde{x}^{UL}$ répondant à l'équation suivante :

$$\widetilde{x}^{UL}=\left(1+f^{UL}\right)\bullet\sum_{k=1}^{K}B_k\bullet\frac{\left(Eb/N_O\right)_k^{*UL}\bullet R_k^{UL}/R_c}{1+\left(Eb/N_O\right)_k^{*UL}\bullet R_k^{UL}/R_c} \qquad (3)$$

Dans cette formule, $f^{UL}$ est un facteur proportionnel à l'interférence provoquée par les autres cellules sur la cellule considérée pour la voie montante. De façon plus précise, il est égal au rapport entre l'interférence des autres cellules (Iextra) et l'interférence à l'intérieur de la cellule (Iintra). Il est quelquefois dénommé facteur d'interférence des autres cellules ou OCIF ("Other Cell Interférence Factor").

L'indice supérieur UL, pour ce paramètre comme pour les autres, signifie qu'on a affaire à la voie montante ("uplink").

$B_k$ est la variable aléatoire définie ci-dessus, c'est-à-dire le nombre de canaux émetteurs pour le service k.

$$\left(Eb/N_O\right)_k^{UL}$$

est le rapport signal à bruit requis pour le service k.

$R_k$ est le nombre de bits par unité de temps pour le service k, $R_c$ est le taux d'échantillonnage (nombre d'échantillons par unité de temps) de chaque symbole ("chip rate") et K est le nombre total de services.

Dans la formule (3) ci-dessus, on notera que la grandeur

$$\left(Eb/N_O\right)_k^{UL}\bullet R_k^{UL}/R_c$$

représente le bruit de la porteuse pour le service k.

À partir de cette variable, $\widetilde{x}^{UL}$, on détermine la fonction de distribution cumulée qui est l'intégrale de la densité de probabilité, c'est-à-dire la probabilité pour qu'une valeur donnée soit atteinte.

La valeur de $\widetilde{x}^{UL}$ qui est retenue sera ainsi la valeur pour laquelle la fonction de distribution cumulée est égale à une valeur H (99% dans l'exemple représenté sur la figure 2).

La valeur 1-H représente une probabilité de défauts dont il faut tenir compte quand on détermine la qualité ou degré de service au cours de la première étape dite d'acceptation, c'est-à-dire quand on détermine les taux de blocage et les retards.

Pour le dimensionnement d'un réseau de télécommunication, il est aussi important de déterminer la puissance de la station de base, c'est-à-dire la puissance descendante.

Cette puissance est déterminée de manière statistique d'une façon analogue à la manière dont est déterminée la charge de la cellule en voie montante.

Cette puissance "descendante" dépend, d'une part, du nombre et du type de communications et, d'autre part, de l'emplacement où se trouvent les utilisateurs. Elle dépend aussi du fait que les terminaux reçoivent ou non des communications d'une ou deux stations de base. On rappelle, en effet, que pour tenir compte des affaiblissements, un même signal peut être envoyé à un mobile par l'intermédiaire de deux stations de base, celles-ci transmettant le même signal utilisé et les moyens de contrôle radio combinent ces deux signaux de façon sélective. Ce type de gestion des communications est quelquefois appelé "soft handover" (transition douce).

Les trois paramètres dont dépend la puissance descendante sont probabilistes (non déterministes). Mais l'impact probabiliste de la localisation de chaque utilisateur et des affaiblissements peut être éliminé grâce aux considérations suivantes :

On part tout d'abord, dans un processus itératif, d'un rayon R déterminé de cellule. Ensuite, on suppose une distribution uniforme des utilisateurs en considérant que ces utilisateurs sont distribués sur N anneaux concentriques autour de la station de base, depuis cette dernière, avec r = 0, jusqu'à deux fois le rayon de la cellule, soit r = 2R.

Avec cette hypothèse, on détermine la puissance nécessaire pour qu'un mobile reçoive un service j quand il se trouve à une distance donnée r de la station de base. Ainsi, si la puissance totale émise par la station de base est connue, cette puissance requise par le mobile a la valeur suivante :

$$Pj(r) = aj(r) \cdot P_{tot} + bj(r) \qquad\qquad (4)$$

Dans cette formule,

$$\left.\begin{array}{l} a_j(r) = \dfrac{\left(C/I\right)_j}{1+\theta \bullet \left(C/I\right)_j}(\theta + f(r)) \\[20pt] b_j(r) = \dfrac{\left(C/I\right)_j}{1+\theta \bullet \left(C/I\right)_j}\left(N_0 \bullet F \bullet W \bullet \textit{Attenuation}_{g,l\&m}(r)\right) \end{array}\right\} \qquad (5)$$

f(r) est l'interférence créée par les autres cellules dans la cellule considérée à l'emplacement r et pour la puissance descendante.

$(C/I)_j$ est la quantité $(C/I)$ pour le service j, c'est-à-dire le rapport entre la puissance utile C reçue (puissance de la porteuse) et la puissance totale d'interférence I reçue. $C/I$ est généralement dénommé "rapport de porteuse à interférence".

$(C/I)$ dépend du rapport signal à bruit selon l'état de transition vers une autre cellule ou non. Ainsi, pour des mobiles qui ne se trouvent pas en situation de transition :

$$\left(C/I\right)_j = \left(E_b/N_0\right)_j^{DL} \bullet R_j^{DL}/R_c \qquad\qquad (6)$$

et pour des mobiles qui se trouvent en situation de transition :

$$\left(C/I\right)_j = \left(E_b/N_0\right)_j^{DL} \bullet R_j^{DL}/R_c \bullet \frac{1}{SHO\_gain} \qquad (7)$$

Dans ces formules, de façon en soi connue,

$$\left(E_b/N_0\right)$$

représente le rapport signal à bruit et SHO_gain est le gain obtenu en "soft handover" car, dans ce cas, la puissance demandée à la station de base est plus faible.

DL est un suffixe signifiant qu'on a affaire à une puissance descendante ("downlink"). $\theta$ est le facteur d'orthogonalité. $N_0$ est le bruit thermique.

F est le facteur de bruit descendant, c'est-à-dire le facteur de bruit du mobile en expression non logarithmique.

W est la largeur de bande.

*Attenuation* $_{g,l\&m}(r)$ est un facteur d'atténuation qui tient compte de la formule connue de Hata et de tous les gains, pertes et marges.

Ainsi la puissance requise dépend de la situation de transition du mobile. Pour un mobile donné et un service donné, et à un emplacement (r), trois cas (ou états) différents de transition peuvent se présenter:

- Le premier cas correspond à un mobile qui ne se trouve pas en situation de transition et est connecté à la station de base.

- Le second cas est un mobile qui se trouve en situation de transition et est connecté à la station de base, cette station étant celle de la cellule considérée qui est la meilleure cellule, c'est-à-dire la station de base pour laquelle le canal pilote est reçu avec la meilleure qualité de signal. Cette station est quelquefois appelée le "node B" controlant la puissance.
- Le troisième cas est un mobile qui se trouve en situation de transition et est connecté à la station de base d'une cellule secondaire, c'est-à-dire d'une cellule dont la station de base fournit un second pilote qui n'est pas reçu avec la meilleure qualité. Dans cas, la puissance du mobile est contrôlée par une autre station de base correspondant à la meilleure cellule.

A chaque emplacement ces trois états (ou cas) ont une probabilité différente. Ces probabilités dépendent de la variance des effets d'ombres et de l'exposant de perte de propagation dans la formule $K_2$ simplifiée de Hata.

La fonction qui fournit la probabilité de chaque état en fonction de l'emplacement, c'est-à-dire de la distance à la station de base, peut être aisément déterminée par simulation.

On peut noter aussi que, bien que le rayon supposé de la cellule soit R, on inclut dans son étendue des mobiles qui sont disposés physiquement dans une autre cellule, à savoir les mobiles se trouvant à une distance comprise entre R et 2R de la station de base, ces mobiles pouvant se trouver en état de transition avec la station de base et ayant donc besoin d'une partie de la puissance.

Si on pondère les valeurs de puissances qui en résultent par les probabilités correspondantes on obtient une puissance reçue par utilisateur et par service en un emplacement déterminé (qui dépend toujours de la puissance totale $P_{tot}$ inconnue). On peut ensuite effectuer une moyenne sur tous les mobiles de chaque service j connectés à la station de base et obtenir ainsi une puissance $P_i$ moyenne requise pour un utilisateur du service j, cette puissance moyenne dépendant donc de la puissance totale disponible $P_{tot}$. Pour obtenir cette moyenne, il n'est pas nécessaire de connaître la valeur effective du nombre de mobiles actifs mais seulement leur répartition relative.

Etant donné qu'on a supposé une dimension de cellule, on peut obtenir à l'aide des calculs donnés ci-dessus de modèles de trafic le nombre de canaux réservés par service ainsi que leurs probabilités d'occupation. Ainsi la puissance totale requise à la station est une variable aléatoire fournie par l'équation suivante :

$$P_{tot} = \frac{Y_{DL}{}^{(R)}}{1 - X_{DL}} \qquad (8)$$

Avec

$$\left\{ \begin{array}{l} X_{DL} = \displaystyle\sum_{j=1}^{j=N_{serv}} a_j \cdot (1 + g_{j \text{ not best sho}}) \cdot B_j \\[4mm] \\ Y_{DL}(R) = P_{CCH} + \displaystyle\sum_{j=1}^{j=N_{serv}} b_j \cdot (1 + g_{j \text{ not best sho}}) \cdot m \cdot B_j \end{array} \right. \qquad (9)$$

Dans ces formules :

$B_j$ est la variable aléatoire qui correspond au nombre de canaux émetteur du service j,
$R$ est le rayon de la cellule qui est déterminé par itération,
$N_{serv}$ est le nombre de services,
$b_i$ est la moyenne pondérée du paramètre $b_i$ (r) apparaissant dans les équations (4) et (5) ci-dessus,
$a_j$ est la moyenne pondérée du facteur $a_j$ (r) apparaissant également dans les équations (4) et (5) ci-dessus,
$P_{cch}$ est la puissance dédiée aux canaux communs SCH (canal de synchronisation) et CPICH (canal de pilote commun),
$m$ est la marge due aux effets d'ombres,
$g_j$ not best sho est la proportion d'utilisateurs par rapport au nombre total d'utilisateurs se trouvant en situation de transition avec la station de base mais qui ne sont pas connectées a cette station de base comme meilleure cellule.

Tous les paramètres de la formule (9) sont des nombres non logarithmiques, c'est-à-dire selon une échelle linéaire.

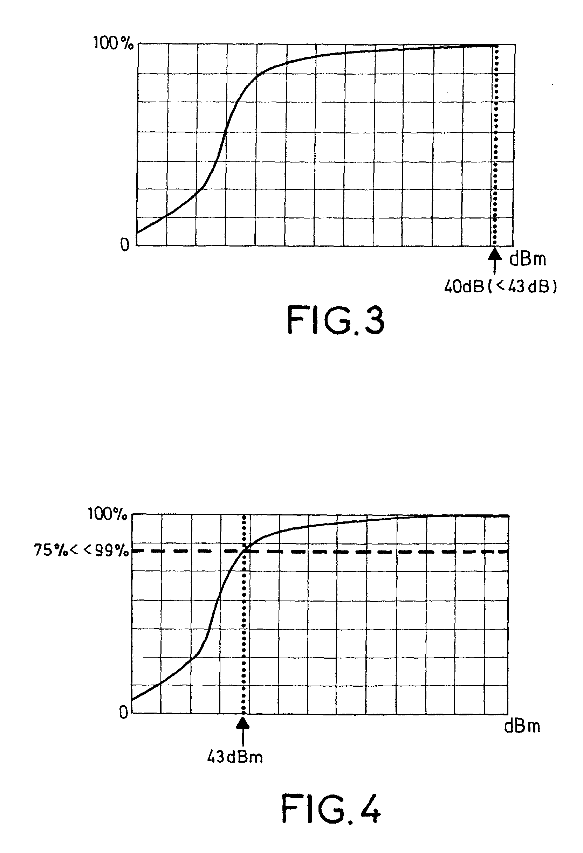

La variable aléatoire peut être décrite par sa fonction de densité de probabilité et par sa fonction de distribution cumulée comme montré par les diagrammes des figures 3 et 4 qui sont analogues à celui de la figure 2. Toutefois, en ordonnées de ces diagrammes des figures 3 et 4, on a porté la puissance de la station de base en dBm.

La figure 3 correspond au cas où la fonction de distribution cumulée atteint la valeur de 100% pour une valeur inférieure ou égale à la puissance maximale admise, qui est, par exemple, de 43 dBm pour une porteuse. Dans ces conditions, puisque la puissance maximale disponible n'est pratiquement jamais utilisé, les ressources de puissance ne sont pas suffisamment utilisées et on peut donc augmenter le rayon de la cellule et effectuer une nouvelle itération.

Le diagramme de la figure 4 correspond au cas où la valeur maximale admissible de 43 dBm correspond à une fonction de densité cumulée de 99% qui est une valeur H fixée à priori.

Bien entendu, une puissance de 43 dBm avec une probabilité de 99% n'est en général pas obtenue de façon immédiate, il faut plusieurs itérations, c'est-à-dire plusieurs valeurs de rayons de cellules pour obtenir ce résultat.

Ainsi, on peut résumer le procédé d'itération pour le calcul de la puissance de la station de base de la manière suivante :

> a) On fixe une valeur R de rayon de cellule.
> b) On calcule la puissance pour un utilisateur pour chaque service et sur N anneaux concentriques depuis le rayon 0 jusqu'au rayon 2R.
> c) On en déduit la puissance moyenne par utilisateur et par service.
> d) On calcule la fonction de densité cumulée de la puissance totale $P_{tot}$ en utilisant le modèle de trafic macroscopique décrit ci-dessus.
> e) On calcule la puissance $P_{tot}$ avec une probabilité H%.
> f) On compare la puissance $P_{tot}$ ainsi calculée à la puissance maximum permise.
> g1)Si le résultat de la comparaison de l'étape f) indique une égalité, alors le rayon R est celui de la cellule.
> g2)Si le résultat de la comparaison de l'étape f) indique que la puissance $P_{tot}$ n'est pas égale à la puissance maximum permise la valeur R est modifiée et on effectue de nouveau les calculs à partir de l'étape b).

## Revendications

1. Procédé de dimensionnement d'un réseau de télécommunication à terminaux mobiles communicant par radio, ce réseau faisant appel à la norme UMTS utilisant la technique CDMA d'accès multiples à répartition de codes et une multiplicité de services, certains services étant transmis en mode circuit et d'autres en mode paquets,
   **caractérisé en ce qu'**au cours d'une première étape, on détermine le nombre de canaux émetteurs, ou connexions admissibles, pour un service dans une cellule de façon que soit respectée les limites de blocage pour les connexions en mode circuit et les limites de retard en mode paquets, et
   au cours d'une seconde étape, on considère le nombre de canaux émetteurs pour chaque service comme une variable aléatoire, on détermine la fonction de distribution cumulée de cette variable aléatoire, ou d'une autre variable aléatoire qui en dépend, et on choisit le paramètre correspondant à cette variable de façon telle que cette fonction de distribution ait une valeur déterminée H, légèrement inférieure à 1, cette valeur étant telle que soit respectée la qualité de service requise en mode paquets et en mode circuit.

2. Procédé selon la revendication 1 **caractérisé en ce que** la valeur H est de l'ordre de 0,99.

3. Procédé selon la revendication 1 ou 2 **caractérisé en ce que** le paramètre est choisi dans le groupe comportant :
   le nombre de canaux émetteurs pour chaque service, la charge de la cellule en voie montante, la puissance descendante pour chaque cellule, et la capacité totale de la cellule.

4. Procédé selon la revendication 3 **caractérisé en ce que** pour déterminer la charge de la cellule en voie montante, on calcule cette charge en la considérant comme une grandeur aléatoire $\tilde{\chi}^{UL}$ répondant à l'équation suivante :

$$\widetilde{x}^{UL} = \left(1 + f^{UL}\right) \bullet \sum_{k=1}^{K} B_k \bullet \frac{\left(Eb / N_O\right)_k^{*UL} \bullet R_k^{UL} / R_c}{1 + \left(Eb / N_O\right)_k^{*UL} \bullet R_k^{UL} / R_c}$$

formule dans laquelle :

$f^{UL}$ est une valeur représentant l'interférence provoquée par les autres cellules sur la cellule considérée pour la voie montante,
$B_k$ est le nombre de canaux émetteurs pour le service k, $B_k$ étant une variable aléatoire,

$$\left(Eb / N_O\right)_k^{UL}$$

est le rapport signal à bruit requis pour le service k,
$R_k^{UL}$ est le nombre de bits par unité de temps pour le service k,
$R_c^k$ est le taux d'échantillonnage (nombre d'échantillons par unité de temps) de chaque symbole, et
K est le nombre total de services.

5. Procédé selon la revendication 4 **caractérisé en ce que** le nombre $B_k$ de canaux émetteurs pour un service k est une variable aléatoire ayant la valeur suivante :

$$B_k = \sum_{j=1}^{C_k} \chi_j^k$$

formule dans laquelle :

$\chi_j^k$ est une variable aléatoire suivant la loi de Bernoulli et ayant la valeur 1 avec une probabilité $p_{em}^k$ et la valeur 0 avec une probabilité $1-p_{em}^k$, $p_{em}^k$ étant la probabilité qu'un canal d'un service k soit émetteur, cette probabilité ayant la valeur suivante :

$$p_{em}^k = p_{occ}^k \bullet V_k \tag{1}$$

$V_k$ étant le facteur d'activité du service k, et $p_{occ}^k$ étant la probabilité qu'un canal réservé pour le service k soit occupé par un utilisateur,
$C_k$ est le nombre de canaux réservés pour le service k.

6. Procédé selon la revendication 3 **caractérisé en ce que**, pour déterminer la puissance totale $P_{tot}$ de la cellule, on détermine la puissance de la cellule par un processus itératif, le rayon de la cellule étant fixé à chaque étape d'itération et, en fonction de ce rayon :

a) on détermine la puissance pour chaque utilisateur et chaque service sur n anneaux concentriques partant du centre de la cellule jusqu'à un rayon qui est sensiblement égal à deux fois le rayon de la cellule,
b) on en déduit la puissance moyenne par utilisateur et par service,
c) on détermine la fonction de distribution cumulée de la puissance totale,
d) on détermine cette puissance totale pour la dite valeur H de la fonction de distribution cumulée, et
e) on compare cette puissance totale à la puissance maximale admise et, si elle est sensiblement égale à cette puissance maximale admise, le rayon de la cellule est celui dont on est parti, et si elle est différente on modifie ce rayon et on recommence les étapes a) à e).

7. Procédé selon l'une des revendications précédentes **caractérisé en ce que** la détermination des connexions acceptées au cours de la première étape est effectuée par un procédé Erlang B pour les services en mode circuit et par un procédé Erlang C pour les services en mode paquets.

CS 1 →
CS 2 →
PS 1 →   | 10 |
PS 2 →
PS 3 →

Nombre de
communications
par service,
taux d'occupation

| Cdf |   → ×(99%)

# FIG.1

Cdf
100%
H = 99%

0

Charge cellule

# FIG.2

FIG.3

FIG.4

Office européen
des brevets

**RAPPORT DE RECHERCHE EUROPEENNE**

Numéro de la demande

EP 03 29 1271

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | MIN-JEONG KIM: "Traffic engineering for next generation mobile communication systems" 2000 IEEE WIRELESS COMMUNICATIONS AND NETWORKING CONFERENCE. CONFERENCE RECORD (CAT. NO.00TH8540), PROCEEDINGS OF IEEE CONFERENCE ON WIRELESS COMMUNICATIONS AND NETWORKING, CHICAGO, IL, USA, 23-28 SEPT. 2000, pages 1453-1456 vol.3, XP010532762 2000, Piscataway, NJ, USA, IEEE, USA ISBN: 0-7803-6596-8 * abrégé * * page 1455, section III : "Traffic engineering" * | 1-7 | H04Q7/36 |
| X | HO C-J ET AL: "IMPACT OF THE CELL SIZE ON THE CELL'S ERLANG CAPACITY AND CALL ADMISSION CONTROL IN THE DS/CDMA CELLULAR NETWORKS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, vol. 1 OF 3. CONF. 51, 15 mai 2000 (2000-05-15), pages 385-389, XP000970646 ISBN: 0-7803-5719-1 * le document en entier * | 1-7 | DOMAINES TECHNIQUES RECHERCHES (Int.Cl.7) H04Q |

Le présent rapport a été établi pour toutes les revendications

| Lieu de la recherche | Date d'achèvement de la recherche | Examinateur |
|---|---|---|
| BERLIN | 10 juillet 2003 | Kampouris, A |